# EUROPÄISCHE PATENTSCHRIFT

(11) **EP 1 715 127 B1**
(45) Veröffentlichungstag und Bekanntmachung des Hinweises auf die Patenterteilung: **19.03.2008**
(21) Anmeldenummer: 05008646.1
(22) Anmeldetag: 20.04.2005
(51) Int. Cl.: E05F 15/00, H02H 7/085

(54) **Verfahren zum Ansteuern eines Antriebs eines Schliess-und Öffnungssystems eines Fahrzeugs**
Method of operating a drive of a closing and opening system of a vehicle
Méthode d'opération d'un entraînement d'un système d'ouverture et fermeture d'un véhicule

(43) Veröffentlichungstag der Anmeldung: 25.10.2006
(73) Patentinhaber: ArvinMeritor GmbH, 63128 Dietzenbach (DE)
(72) Erfinder: Poettcher, Martin, 64846 Gross-Zimmern (DE); Heyn, Detlef, 35274 Kirchhain (DE)
(74) Vertreter: Sties, Jochen

(56) Entgegenhaltungen:
- EP-A- 1 054 128
- EP-A- 1 174 975
- DE-A1- 4 020 351
- US-B1- 6 219 599
- US-B1- 6 472 836

## Beschreibung

Die Erfindung betrifft ein Verfahren zum Ansteuern eines Antriebs eines Schließ- und Öffnungssystems eines Fahrzeugs.

Zur Ansteuerung eines Antriebs für ein Schließ- und Öffnungssystems eines Fahrzeugs, beispielsweise eines Fensterhebersystems oder Schiebedachsystems, werden üblicherweise elektronische Steuergeräte eingesetzt. Zum besseren Verständnis der Erfindung wird nachfolgend auf ein Steuergerät Bezug genommen, das in einer Tür des Fahrzeugs angeordnet ist und Teil des Fensterhebersystems ist. Dieses Steuergerät kann dabei nicht nur den elektrischen Fensterheber steuern, sondern auch ein Türschloß oder einen elektrisch verstellbaren Außenspiegel.

Es ist gesetzlich vorgeschrieben, Fensterhebersysteme mit einem Einklemmschutz zu versehen, der ein Einklemmen eines Gegenstandes beim Schließen des Fensters verhindern soll. Der Einklemmschutz muß dabei in Abhängigkeit von Fahrzeugparametern gesteuert werden, da im Stand des Fahrzeugs andere maximale Kräfte zulässig sind als bei einem fahrenden Fahrzeug. Auch muß der Einklemmschutz beim Verschieben des Fensters bei einem fahrenden Fahrzeug die Einflüsse aus z.B. der wirkenden Windlast berücksichtigen. Daher ist für das Einklemmschutzsystem eine Unterscheidung notwendig, ob das Fahrzeug steht oder fährt.

Es ist bekannt, daß einige Einklemmschutz-Systeme zur Unterscheidung zwischen einem fahrenden oder stehenden Fahrzeug unmittelbar eine Information über die Fahrgeschwindigkeit verwenden; diese Information wird z.B. dabei über ein Bussystem bereitgestellt. Bei einem Bussystem handelt es sich jedoch um ein sehr teures System im Fahrzeug, auf das aus Kostengründen bei manchen Fahrzeugtypen verzichtet werden soll. Dann kann aber auf diesem Wege keine Information mehr über die Fahrgeschwindigkeit und damit über einen für den Betrieb des Einklemmschutz-Systems wichtigen Fahrzeugparameter erhalten werden.

Auch sind Einklemmschutz-Systeme bekannt, die den Einklemmschutz mittels eines Freigabesignals steuern, wobei das Freigabesignal Signale der Fahrzeugtüren und Signale des Zündschlosses verwendet, um zu unterscheiden, ob ein Fahrzeug fährt oder steht. Diese Unterscheidung gestaltet sich dabei schwierig und ist nicht eindeutig, da beispielsweise bei geschlossener Fahrzeugtür und einem im Zündschloß befindlichen Schlüssel der Motor sowohl laufen als auch nicht laufen kann und somit bei einem stehenden Fahrzeug fälschlicherweise die Parameter verwendet werden können, die eigentlich für ein fahrendes Fahrzeugs vorgesehen sind. Auch bei solchen Systemen sind zusätzliche Signalleitungen zum Steuergerät notwendig (z.B. Fahrgeschwindigkeitssignal).

Ein Beispiel von einem Einklemmschutz-System wird im Dokument US-B1-6 472 836 beschrieben.

Die Aufgabe der Erfindung besteht darin, ein Verfahren zum Betreiben eines Einklemmschutzsystems für ein Schließ- und Öffnungssystem bereitzustellen, das einen effektiven und kostengünstigen Einklemmschutz gewährleistet, ohne daß ein Bussystem oder zusätzlich Signalleitungen erforderlich sind.

Dies wird erfindungsgemäß ermöglicht durch ein Verfahren zum Ansteuern eines Antriebs eines Schließ- und Öffnungssystems eines Fahrzeugs, mit einem Steuergerät, das eine Einklemmschutzschaltung aufweist, wobei die am Steuergerät anliegende Versorgungsspannung gemessen wird und in Abhängigkeit von der Versorgungsspannung eine Unterscheidung getroffen wird, ob die Einklemmschutzschaltung mit Einklemmschutzparametern für ein stehendes Fahrzeug oder ein fahrendes Fahrzeug betrieben wird. Die Erfindung beruht auf dem Grundgedanken, für die Unterscheidung zwischen einem stehenden Fahrzeug und einem fahrenden Fahrzeug den Spannungswert der Bordelektrik zu verwenden, da sich dieser Spannungswert in Abhängigkeit davon unterscheidet, ob die Lichtmaschine angetrieben wird oder nicht. Wenn die Lichtmaschine nicht angetrieben wird, beläuft sich der Spannungswert der Bordelektrik auf etwa 12 V. Dies wird so interpretiert, daß der Motor nicht läuft (andernfalls müßte ja die Lichtmaschine angetrieben werden) und das Fahrzeug steht. In diesem Zustand wird das Steuergerät mit den Einklemmschutzparametern für ein stehendes Fahrzeug betrieben. Wenn dagegen die Lichtmaschine angetrieben wird, beträgt der Spannungswert der Bordelektrik über 14 V. Aus diesem Spannungswert wird geschlossen, daß der Motor läuft und das Fahrzeug fährt. In diesem Zustand wird das Steuergerät mit den Einklemmschutzparametern für ein fahrendes Fahrzeug betrieben. Für die Auswahl der korrekten Betriebsart der Einklemmschutzschaltung ist es also weder erforderlich, über ein Bussystem unmittelbar eine Information über die Fahrgeschwindigkeit zu erhalten, noch sind separate Signalleitungen erforderlich, die eine Information über den Zustand des Zündschlosses und der Fahrzeugtüren bereitstellen.

Die am Steuergerät gemessene Versorgungsspannung kann dabei in zwei Spannungsbereiche eingeteilt sein, wobei unterschieden wird, ob die am Spannungsmesser gemessene Spannung in einen ersten oder zweiten Spannungsbereich fällt. Falls die gemessene Spannung in den ersten Spannungsbereich fällt, arbeitet die Einklemmschutzschaltung in einer ersten Betriebsart, in der die Einklemmschutzschaltung mit den Parametern für ein Fahrzeug im Stand arbeitet. Falls die gemessene Spannung jedoch in den zweiten Spannungsbereich fällt, arbeitet die Einklemmschutzschaltung in einer zweiten Betriebsart, in der die Einklemmschutzschaltung mit den Parametern arbeitet, die für ein fahrendes Fahrzeug vorgesehen sind. Der erste Spannungsbereich liegt dabei unterhalb einer bestimmten Schwelle und der zweite Spannungsbereich oberhalb der bestimmten Schwelle.

Bevorzugt liegt die Schwelle zwischen dem Spannungswert, den eine Fahrzeugbatterie liefert, wenn sie nicht geladen wird, und dem Wert, den eine Lichtmaschine liefert, um die Fahrzeugbatterie zu laden. Der Spannungswert, den eine Fahrzeugbatterie liefert, wenn sie nicht geladen wird, liegt dabei im Bereich von 12 bis 12,5 V, wohingegen der Spannungswert, den eine Lichtmaschine liefert, um die Fahrzeugbatterie zu laden, zwischen 13,5 und 14,4 V liegt, so daß der erste Spannungsbereich zwischen 12 und 13 V liegt, während der zweite Spannungsbereich oberhalb der Schwelle zwischen 13 und 14,4 V liegt.

Bevorzugt ist ein Speicher vorgesehen, in den die gemessene Versorgungsspannung bei einer Initialisierung eingeschrieben werden kann. Bei einer Alterung der Fahrzeugbatterie verringert sich im allgemeinen die an der Fahrzeugbatterie anliegende und vom Spannungsmesser gemessene Spannung, so daß ein Schwellenwert zwischen den beiden Spannungsbereichen korrigiert werden sollte. Deswegen ist ein Speicher vorgesehen, der die Versorgungsspannung bei einer Initialisierung einschreibt und die Schwelle und die damit verbundenen Spannungsbereiche an die Alterung der Fahrzeugbatterie anpaßt.

Weitere Merkmale und Vorteile ergeben sich aus den Unteransprüchen. Die Erfindung wird nachfolgend anhand der bevorzugten Ausführungsform beschrieben, die in den Zeichnungen dargestellt ist. In den Zeichnungen zeigen:
- Figur 1 eine schematische Ansicht eines Fahrzeugs mit einem erfindungsgemäßen Steuergerät, hier als Teil eines Fensterhebersystems,
- Figur 2 ein Flußdiagramm des Verfahrens zum Ansteuern des Antriebs des Schließ- und Öffnungssystems, und
- Figur 3 ein Diagramm eines erfindungsgemäßen Verfahrens zum Ansteuern eines Antriebs eines Schließ- und Öffnungssystems verglichen mit dem Stand der Technik.

Die Erfindung kann grundsätzlich auf alle Steuergeräte für ein Schließ- und Öffnungssystem eines Fahrzeugs angewendet werden, beispielsweise für Steuergeräte, die Teil eines Fensterhebersystems, eines Schiebedachsystems, eines Trennscheibenantriebs oder eines Antrieb für eine Klappe einer Fahrzeugkarosserie, wie z.B. eine Heckklappe oder eine Fahrzeugtür, sind. Zum besseren Verständnis wird die Erfindung nachfolgend am Beispiel eines Fensterhebersystems erläutert. Es ist erkennbar, daß die Prinzipien in gleicher Weise bei den genannten anderen Systemen eingesetzt werden können.

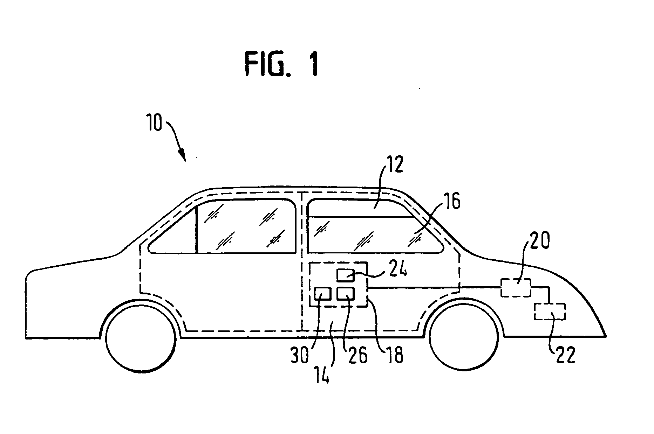

Figur 1 zeigt ein Fahrzeug 10 mit einem Fensterhebersystem. Das Fensterhebersystem weist eine Öffnung 12 in einer Fahrzeugtür 14 auf, die durch ein vertikales Verschieben einer Scheibe 16 geöffnet zu werden, indem die Scheibe 16 in bekannter Weise von einem nicht gezeigten Antrieb aus einer geschlossenen Stellung in eine geöffnete Stellung und zurück verstellt wird. Der Antrieb ist dabei an ein schematisch gezeigtes Steuergerät 18 gekoppelt, das in der Fahrzeugtür 14 vorgesehen ist.

Das Steuergerät 18 wird in bekannter Weise von einer Fahrzeugbatterie 20 mit der erforderlichen Spannung versorgt. Die Fahrzeugbatterie 20 ist wiederum an eine Lichtmaschine 22 gekoppelt, von der sie bei laufendem Motor geladen wird, so daß die an der Fahrzeugbatterie 20 und am Steuergerät 18 anliegende Versorgungsspannung bei laufendem Motor im Bereich von etwa 13,5 bis 14,4 V liegt. Wenn der Motor nicht läuft, beträgt die am Steuergerät 18 anliegende Versorgungsspannung etwa 12 bis 12,5 V.

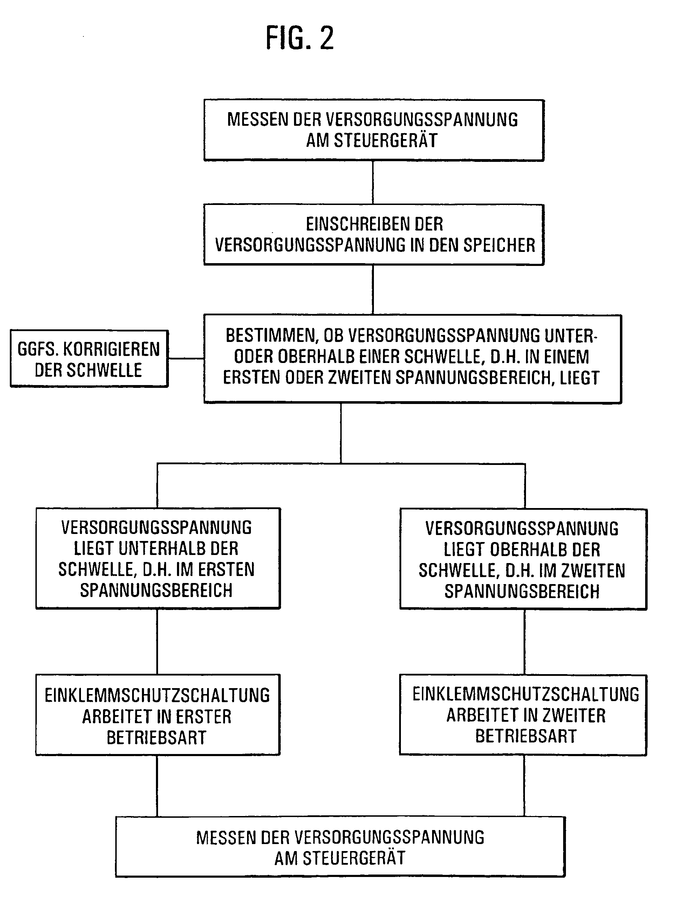

Das Flußdiagramm in Figur 2 zeigt die Hauptschritte eines erfindungsgemäßen Verfahrens zum Ansteuern des Antriebs des Fensterhebersystems.

Bei einer Initialisierung des Systems wird die gemessene Versorgungsspannung in einen Speicher 26 (schematisch in Figur 1 gezeigt) eingeschrieben, um eine aktuelle, sich aufgrund der Alterung der Fahrzeugbatterie 20 mitunter ändernde Ausgangsspannung bei nicht laufender Lichtmaschine zu erhalten.

Dann wird die am Steuergerät 18 anliegende Versorgungsspannung von einem Spannungsmesser 24 (schematisch in Figur 1 gezeigt) gemessen. Aus der gemessenen Versorgungsspannung wird bestimmt, ob die Versorgungsspannung ober- oder unterhalb der bestimmten Schwelle liegt. Die Schwelle liegt dabei bei etwa 13 V und kann ggfs. auf Grund einer möglichen Alterung der Fahrzeugbatterie 20 korrigiert werden.

Abhängig von der gemessenen Versorgungsspannung kann eine am Steuergerät 18 vorgesehene Einklemmschutzschaltung 30 in zwei Betriebsarten arbeiten.

Falls die Versorgungsspannung unterhalb der Schwelle liegt, d.h. in dem ersten Spannungsbereich von etwa 12 bis 13 V, wird hieraus geschlossen, daß die Lichtmaschine nicht angetrieben wird und daher der Motor des Fahrzeugs nicht läuft. Daher wird die Einklemmschutzschaltung 30 in einer ersten Betriebsart betrieben, in der sie mit den Parametern für ein Fahrzeug im Stand arbeitet, d.h. Windlast, Schlechtwegstrecke oder ähnliches werden nicht berücksichtigt, und die gesetzlich vorgegebene Klemmkraft für ein stehendes Fahrzeug wird eingehalten.

Falls die Versorgungsspannung oberhalb der Schwelle von 13 V liegt, also in einem zweiten Spannungsbereich von 13 bis 14,4 V, wird hieraus geschlossen, daß die Lichtmaschine angetrieben wird, um die Fahrzeugbatterie zu laden, und daher der Motor des Fahrzeugs läuft. Daher wird die Einklemmschutzschaltung 30 in der zweiten Betriebsart betrieben, in der sie mit den Parametern für ein fahrendes Fahrzeug arbeitet, d.h. Windlastverhältnisse und/oder erhöhte Reibungen z.B. durch Schlechtwegstrecke werden berücksichtigt. Dies gewährleistet, daß das Fensterhebersystem die beim Schließen auftretenden, möglicherweise erhöhten Widerstandskräfte nicht fälschlich als ein Hindernis im Weg des zu schließenden Fensters interpretiert und das Schließen der Scheibe 16 unnötig stoppt.

Unabhängig davon, ob die Versorgungsspannung unterhalb oder oberhalb der Schwelle liegt, d.h. in dem ersten oder zweiten Spannungsbereich, wird die Versorgungsspannung in vorher bestimmten Abständen gemessen, so daß erneut bestimmt wird, ob die Versorgungsspannung unter- oder oberhalb der Schwelle liegt, d.h. in dem ersten oder zweiten Spannungsbereich und in Abhängigkeit davon die Einklemmschutzschaltung 30 in der ersten oder zweiten Betriebsart arbeitet.

Im Bereich des Schwellenwerts S kann ein Hysterese-Bereich berücksichtigt werden, so daß ein häufiges Umschalten zwischen der ersten und der zweiten Betriebsart verhindert wird.

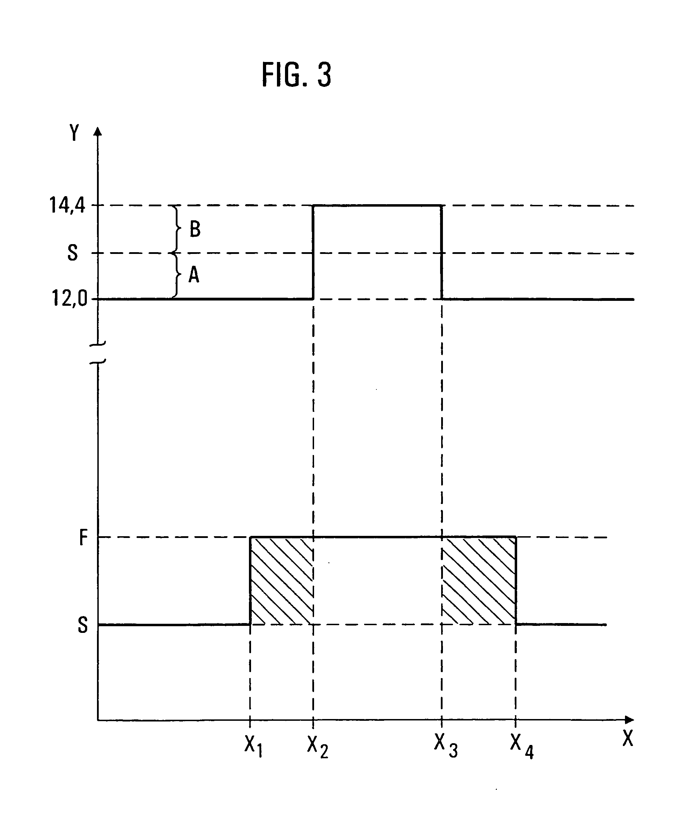

Figur 3 zeigt vereinfacht ein Diagramm des erfindungsgemäßen Verfahrens zur Ansteuerung des Schließ- und Öffnungssystems, das mit dem im Stand der Technik benutzten Freigabesignal verglichen wird.

Auf der X-Achse ist dabei die Zeit t aufgetragen, während auf der Y-Achse die Versorgungsspannung in Volt bzw. das vorhandene Freigabesignal aufgetragen ist. Beim Freigabesignal wird dabei zwischen einer erster Betriebsart S unterschieden, der den Einklemmschutz für ein Fahrzeug im Stand steuert, und einer zweiten Betriebsart F, der den Einklemmschutz für ein fahrendes Fahrzeug steuert.

Bei der erfindungsgemäßen Ansteuerung der Einklemmschutzschaltung 30 ist eine Grundspannung von etwa 12 V vorhanden, wenn der Motor nicht läuft. Beim Starten des Motors zum Zeitpunkt X₃ und einem damit verbundenen Ladevorgang der Fahrzeugbatterie 20 durch die Lichtmaschine 22 steigt die Spannung auf etwa 14,4 V an und sinkt nach Abschalten des Motors zum Zeitpunkt X₃ wiederum auf die Grundspannung von 12,0 V ab. Zwischen den beiden Spannungswerten wird die Schwelle von 13 V festgelegt, die einen ersten und zweiten Spannungsbereich A, B festlegt. Dabei befindet sich der erste Spannungsbereich A von 12 bis 13 V und der zweite Spannungsbereich B von 13 bis 14,4 V.

Die Einklemmschutzschaltung 30 arbeitet dabei in der ersten Betriebsart, wenn die anliegende Versorgungsspannung im ersten Spannungsbereich A liegt. In dieser Betriebsart S arbeitet die Einklemmschutzschaltung 30 mit den Parametern, die für ein Fahrzeug im Stand vorgesehen sind, d.h. Windlast, Schlechtwegstrecke oder ähnliches werden nicht berücksichtigt.

Die Einklemmschutzschaltung 30 arbeitet in der zweiten Betriebsart, wenn die anliegende Versorgungsspannung im zweiten Spannungsbereich vorliegt, d.h. wenn die Schwelle von 13 V überschritten wird, weil die Fahrzeugbatterie 20 von der Lichtmaschine 22 geladen wird. In der zweiten Betriebsart F arbeitet die Einklemmschutzschaltung 30 mit den Parametern für ein fahrendes Fahrzeug, d.h. Fahrtwind, Schlechtwegstrecke etc. werden berücksichtigt. Bei einem fahrendem Fahrzeug können geänderte Kräfte notwendig sein, um ein Fenster zu schließen. Es werden also angepaßte Kraftreserven bereitgestellt und/oder von der Einklemmschutzschaltung toleriert, um zu verhindern, daß die Einklemmschutzschaltung 30 anspricht und ein Schließen des Fensters stoppt, obwohl kein Hindernis vorhanden ist.

Bei der Ansteuerung des Einklemmschutzes im Stand der Technik wird ein Freigabesignal verwendet, das Signale des Zündschlosses und der Fahrzeugtür kombiniert. Wenn also die Fahrzeugtür geschlossen ist und sich ein Schlüssel im Zündschloß befindet, wird zum Zeitpunkt X₁ der Einklemmschutz gemäß der Betriebsart F für ein fahrendes Fahrzeug gesteuert und mit den Parametern für ein fahrendes Fahrzeug versehen, obwohl der Schlüssel sich im Zündschloß befinden könnte, ohne daß der Motor läuft und das Fahrzeug noch stehen könnte. In diesem Fall würden die für ein fahrendes Fahrzeug geltenden Parameter früher zugeschaltet werden (schraffierte Fläche) als bei der Erfindung. Dies würde dazu führen, daß beim Schließen des Fensters diesem eine größere Kraft entgegengesetzt werden muß, so daß ein vorhandenes Hindernis erst später dazu führen würde, daß das Schließen des Fensters gestoppt würde.

Gleichfalls wird der Einklemmschutz entsprechend der Betriebsart S für ein Fahrzeug im Stand gesteuert, wenn der Schlüssel aus dem Zündschloß entfernt wird, obwohl das Fahrzeug bereits zum Zeitpunkt X₃ mit ausgeschalteter Zündung und nicht-laufendem Motor aber noch steckendem Schlüssel im Zündschloß stehen könnte.

Im Stand der Technik ist also keine genaue Zuordnung möglich, wohingegen die am Steuergerät anliegende Versorgungsspannung erst bei laufendem Motor erhöht wird und die Einklemmschutzschaltung tatsächlich erst dann in der Betriebsart für ein fahrendes Fahrzeug arbeitet.

### Bezugszeichenliste

- 10: Fahrzeug
- 12: Öffnung
- 14: Fahrzeugtür
- 16: Scheibe
- 18: Fahrzeugbatterie
- 22: Lichtmaschine
- 24: Spannungsmesser
- 26: Speicher
- 30.: Einklemmschutzschaltung

## Patentansprüche

1. Verfahren zum Ansteuern eines Antriebs eines Schließ- und Öffnungssystems eines Fahrzeugs, mit einem Steuergerät (18), das eine Einklemmschutzschaltung (30) aufweist, **gekennzeichnet durch** folgende Schritte:
- die am Steuergerät (18) anliegende Versorgungsspannung wird gemessen; und
- in Abhängigkeit von der Versorgungsspannung wird eine Unterscheidung getroffen, ob die Einklemmschutzschaltung mit Einklemmschutzparametem für ein stehendes Fahrzeug oder ein fahrendes Fahrzeug betrieben wird.

2. Verfahren nach Anspruch 1, **dadurch gekennzeichnet, daß** beim Messen der Versorgungsspannung bestimmt wird, ob diese oberhalb oder unterhalb einer bestimmten Schwelle liegt.

3. Verfahren nach Anspruch 2, **dadurch gekennzeichnet, daß** die Schwelle zwischen dem Spannungswert liegt, den eine Fahrzeugbatterie (20) liefert, wenn sie nicht geladen wird, und dem Spannungswert, den eine Lichtmaschine (22) liefert, um die Fahrzeugbatterie (20) zu laden.

4. Verfahren nach Anspruch 2 oder Anspruch 3, **dadurch gekennzeichnet, daß** die Schwelle bei etwa 13 V liegt.

5. Verfahren nach einem der Ansprüche 2 bis 4, **dadurch gekennzeichnet, daß** die Schwelle in Abhängigkeit von der Alterung der Fahrzeugbatterie (20) korrigiert wird.

6. Verfahren nach einem der vorhergehenden Ansprüche, **dadurch gekennzeichnet, daß** beim Messen der Versorgungsspannung bestimmt wird, ob diese in einem ersten Spannungsbereich (A) oder in einem zweiten Spannungsbereich (B) liegt.

7. Verfahren nach einem der vorhergehenden Ansprüche, **dadurch gekennzeichnet, daß** ein Speicher (26) vorgesehen ist, in den die von der Lichtmaschine (22) gelieferte, gemessene Versorgungsspannung bei einer Initialisierung eingeschrieben wird.

8. Verfahren nach einem der vorhergehenden Ansprüche, **dadurch gekennzeichnet, daß** das Steuergerät (18) als Teil eines Fensterhebersystems verwendet wird.

9. Verfahren nach einem der Ansprüche 1 bis 7, **dadurch gekennzeichnet, daß** das Steuergerät (18) als Teil eines Schiebedachsystems verwendet wird.

10. Verfahren nach einem der Ansprüche 1 bis 7, **dadurch gekennzeichnet, daß** das Steuergerät (18) als Teil eines Trennscheibenantriebs verwendet wird.

11. Verfahren nach einem der Ansprüche 1 bis 7, **dadurch gekennzeichnet, daß** das Steuergerät (18) als Teil eines Antriebs für eine Klappe einer Fahrzeugkarosserie verwendet wird.

12. Verfahren nach Anspruch 11, **dadurch gekennzeichnet, daß** die Klappe eine Heckklappe, eine Fahrzeugtür etc. ist.

## Claims

1. A method of controlling a drive of a closing and opening system of a vehicle, comprising a control device (18) including an anti-pinch circuit (30), **characterized by** the following steps:
- measuring the supply voltage across the control device (18); and
- making a differentiation, depending on the supply voltage, as to whether the anti-pinch circuit is operated with anti-pinch parameters for a standing vehicle or a moving vehicle.

2. The method according to claim 1, **characterized in that** during measuring the supply voltage it is determined whether it is above or below a defined threshold.

3. The method according to claim 2, **characterized in that** the threshold lies between the voltage value delivered by a vehicle battery (20) when it is not in the state of being charged, and the voltage value delivered by an electric generator (22) for charging the vehicle battery (20).

4. The method according to claim 2 or claim 3, **characterized in that** the threshold amounts to approximately 13 V.

5. The method according to any one of claims 2 to 4, **characterized in that** the threshold is corrected depending on the aging of the vehicle battery (20).

6. The method according to any one of the preceding claims, **characterized in that** during measuring the supply voltage it is determined whether it lies in a first voltage range (A) or in a second voltage range (B).

7. The method according to any one of the preceding claims, **characterized in that** a memory (26) is provided into which the measured supply voltage delivered by the electric generator (22) is written during an initialization.

8. The method according to any one of the preceding claims, **characterized in that** the control device (18) is used as part of a window lifter system.

9. The method according to any one of claims 1 to 7, **characterized in that** the control device (18) is used as part of a sliding roof system.

10. The method according to any one of claims 1 to 7, **characterized in that** the control device (18) is used as part of a partition window drive.

11. The method according to any one of claims 1 to 7, **characterized in that** the control device (18) is used as part of a drive for a flap of a vehicle body.

12. The method according to claim 11, **characterized in that** the flap is a tailgate, a vehicle door etc..

## Revendications

1. Procédé de pilotage d'un entraînement d'un système de fermeture et d'ouverture d'un véhicule, comprenant un appareil de commande (18) qui présente un circuit (30) de protection contre un coincement, **caractérisé par** les étapes suivantes :
- la tension d'alimentation appliquée à l'appareil de commande (18) est mesurée ; et
- il est effectué une différenciation, en fonction de la tension d'alimentation, pour le cas où le circuit de protection contre un coincement fonctionne avec des paramètres de protection contre un coincement pour un véhicule en stationnement ou pour un véhicule en marche.

2. Procédé selon la revendication 1, **caractérisé en ce qu'**il est déterminé, lors de la mesure de la tension d'alimentation, si celle-ci est supérieure ou inférieure à un seuil déterminé.

3. Procédé selon la revendication 2, **caractérisé en ce que** le seuil est compris entre la valeur de tension fournie par une batterie (20) de véhicule, lorsqu'elle n'est pas chargée, et la valeur de tension fournie par une génératrice (22) pour charger la batterie (20) de véhicule.

4. Procédé selon la revendication 2 ou la revendication 3, **caractérisé en ce que** le seuil est à environ 13 V.

5. Procédé selon l'une des revendications 2 à 4, **caractérisé en ce que** le seuil est corrigé en fonction du vieillissement de la batterie (20) de véhicule.

6. Procédé selon l'une des revendications précédentes, **caractérisé en ce qu'**il est déterminé, lors de la mesure de la tension d'alimentation, si celle-ci est dans une première plage de tension (A) ou dans une deuxième plage de tension (B).

7. Procédé selon l'une des revendications précédentes, **caractérisé en ce qu'**il est prévu une mémoire (26) dans laquelle la tension d'alimentation mesurée, fournie par la génératrice (22) est inscrite lors d'une initialisation.

8. Procédé selon l'une des revendications précédentes, **caractérisé en ce que** l'appareil de commande (18) est utilisé en tant que pièce d'un système de lève-vitre.

9. Procédé selon l'une des revendications 1 à 7, **caractérisé en ce que** l'appareil de commande (18) est utilisé en tant que pièce d'un système de toit ouvrant.

10. Procédé selon l'une des revendications 1 à 7, **caractérisé en ce que** l'appareil de commande (18) est utilisé en tant que pièce d'un entraînement de vitre de séparation.

11. Procédé selon l'une des revendications 1 à 7, **caractérisé en ce que** l'appareil de commande (18) est utilisé en tant que pièce d'un entraînement pour un ouvrant d'une carrosserie de véhicule.

12. Procédé selon la revendication 11, **caractérisé en ce que** l'ouvrant est un hayon, une portière de véhicule etc.
